# EUROPÄISCHE PATENTSCHRIFT

(11) **EP 3 411 257 B1**
(45) Veröffentlichungstag und Bekanntmachung des Hinweises auf die Patenterteilung: **27.03.2019**
(21) Anmeldenummer: 17700332.4
(22) Anmeldetag: 12.01.2017
(51) Int. Cl.: B60K 26/02, B60W 50/16, B60W 50/00

(54) **VERFAHREN ZUR AUTOMATISCHEN BENUTZERANPASSUNG DER REIZCHARAKTERISTIK EINES AKTIVEN BEDIENELEMENTES EINES FAHRZEUGS**
METHOD FOR AN AUTOMATIC USER ADAPTATION OF A STIMULUS CHARACTERISTIC OF AN ACTIVE OPERATING ELEMENT OF A VEHICLE
PROCÉDÉ POUR UNE ADAPTATION AUTOMATIQUE À UN UTILISATEUR D'UNE CARACTÉRISTIQUE D'UN STIMULUS D'UN ÉLÉMENT ACTIF D'OPÉRATION D'UN VÉHICULE

(30) Priorität: 06.02.2016 DE 102016001369
(43) Veröffentlichungstag der Anmeldung: 12.12.2018
(73) Patentinhaber: Audi AG, 85045 Ingolstadt (DE)
(72) Erfinder: LEPCZYK, Daniel, 86529 Schrobenhausen (DE)
(86) Internationale Anmeldenummer: PCT/EP2017/050525
(87) Internationale Veröffentlichungsnummer: WO 2017/133871

(56) Entgegenhaltungen:
- DE-A1-102009 042 899
- DE-A1-102010 010 400
- DE-T5-112012 002 576
- US-A1- 2014 316 648

## Beschreibung

Die Erfindung betrifft ein Verfahren zur automatischen Benutzeranpassung der Reizcharakteristik eines aktiven Bedienelementes eines Fahrzeugs nach dem Oberbegriff des Patentanspruches 1 sowie eine Anordnung zur Durchführung des Verfahrens nach dem Oberbegriff des Patentanspruches 11.

Während passive Bedienelemente aufgrund ihres konstruktiven Aufbaus nur ein passives Feedback durch ihre Betätigungshaptik geben können, zeichnen sich aktive Bedienelemente dadurch aus dass sie im Gegensatz zu passiven Bedienelementen, bei ihrer Betätigung situationsabhängig über Kraft- oder Bewegungsänderungen taktil wahrnehmbare Informationen in Form eines Reizes an den Benutzer übertragen können. Diese Kraft- oder Bewegungsänderung aktiver Bedienelemente wird durch eine Ansteuerinformation erzeugt, mit der das aktive Bedienelement angesteuert wird. Diese Ansteuerinformation wird hier als Reizcharakteristik bezeichnet.

Aktive Bedienelemente haben in jüngerer Vergangenheit zunehmend Eingang in den Kraftfahrzeugbau gefunden. Hier sind aktive Fahrzeugpedale und aktive Lenkräder an erster Stelle zu nennen. Beide sind so aufgebaut, dass sie entweder eine durch die Bedienperson taktil wahrnehmbare, der Betätigungskraft entgegengerichtete Gegenkraft fahrsituationsabhängig erzeugen oder das Betätigungselement fahrsituationsabhängig in eine durch die Bedienperson taktil wahrnehmbare Schwingung versetzen. Im ersten Fall ist in der Mechanik des Betätigungselementes ein die Gegenkraft erzeugender Aktor vorgesehen, im zweiten Fall ein Schwingungserzeuger, der mechanische Schwingungen vorgegebener Frequenz und Amplitude auf das Bedienelement aufbringt. Eingesetzt werden derartige aktive Bedienelemente meist in Verbindung mit sogenannten Assistenzsystemen, die dazu dienen den Fahrer darin zu unterstützen ungewünschte Fahrsituation und/oder Betriebssituationen zu vermeiden. Im Sinne des hier erörterten Sachverhaltes liegt eine solche ungewünschte Fahrsituation und/oder Betriebssituation des Fahrzeugs dann vor, wenn die Bedienperson durch den aktuellen Betätigungsgrad des aktiven Bedienelementes diese bestimmte Fahrsituation und/oder Betriebssituation herbeigeführt hat und/oder die ungewünschte Fahrsituation und/oder Betriebssituation durch eine Änderung des aktuellen Betätigungsgrades des aktiven Bedienelementes in einen Normalzustand rückführbar ist.

Hat beispielsweise ein Fahrer sein Fahrzeug durch zu starke Betätigung des Gaspedals kurz vor ein bevorstehendes Durchdrehen der Antriebsräder gebracht, kann eine mit einem Stabilitätssystem ausgerüstete Fahrzeugsteuereinheit durch Auswertung entsprechender Sensorwerte das bevorstehende Durchdrehen der Räder erfassen und dem Fahrer durch Aufbauen einer der Betätigungskraft des Gaspedals entgegengerichteten Kraft signalisieren, vom Gas zu gehen. Eine mit einem Spurhalte-Assistenzsystem ausgerüstete Fahrzeugsteuereinheit kann beispielsweise so ausgebildet sein, dass diese bei drohendem Verlassen der Fahrspur einen Schwingungserzeuger ansteuert, der das Lenkrad in Schwingung versetzt. In beiden Fällen wird dem Fahrer ein taktil wahrnehmbarer Reiz bestimmter Charakteristik geboten um die ungewünschte Fahrsituation zu vermeiden. Gleichermaßen können unerwünschte Betriebssituationen, wie beispielsweise das Überdrehen des Motors, dem Fahrer taktil mitgeteilt werden.

Die vorstehend angesprochenen Beispiele lassen sich auf viele unterschiedliche Fahrsituationen und/oder Betriebssituationen und auf beliebige Bedienelemente übertragen, selbstverständlich auch in der Weise, dass Pedale in Vibration versetzt werden und auf Lenkräder eine der Lenkkraft entgegen gerichtete Kraft aufgebracht wird.

Problematisch bei der Wahl der Intensität des Reizes, also der Gegenkraft die auf das Bedienelement aufgebracht wird oder der Amplitude und Frequenz die auf das Bedienelement als Schwingung aufgebracht wird ist, dass zwei gegenläufige Forderungen erfüllt werden sollen. Einerseits ist die taktile Wahrnehmung durch den Fahrer sicherzustellen, andererseits soll die Stärke des taktil wahrnehmbaren Signals den Fahrkomfort nicht wesentlich beeinflussen.

Um diesen gegenläufigen Forderungen gerecht zu werden wurde in der gattungsbildenden DE 10 2010 010 400 A1 bereits vorgeschlagen, bei einem durch ein steuerbares Dämpfungselement beaufschlagtem Pedal die der Betätigungskraft entgegenwirkenden Kraft veränderbar zu gestalten in der Weise, dass diese Gegenkraft in einem Sport-Fahrmodus gegenüber einem Grundwert erhöht wird und in einem Komfort-Modus gegenüber einem Grundwert vermindert wird. Weiter soll der Grundwert durch den Fahrer einstellbar sein.

Der hierdurch aufgezeigte Weg entschärft zwar das angesprochene Problem der Wahl der Reizintensität etwas, erfordert aber einerseits das aktive Eingreifen des Fahrers, was wiederum komfortmindernd wirkt und ist an die angesprochenen Fahr-Modi gebunden.

In der DE 10 2007 032 310 A1 wird in Verbindung mit einem aktiven Bedienpedal eines Nutzfahrzeugs vorgeschlagen, die Einstellbarkeit der Gegenkraft durch die Bedienperson so vorzunehmen, dass die gesamte Bediencharakteristik individuell angepasst ist und abgespeichert werden kann.

Auch bei dieser Lösung ist ein aufwändiger Einstellprozess durch die Bedienperson erforderlich, der für Landmaschinen oder Baumaschinen ausreichend sein kann, aber für Personenkraftwagen nicht zielführend ist.

Weiter wird in der DE 10 2011 088 266 A1 zur Vermeidung der manuellen Einstellung einer von einem Fahrpedal erzeugten Gegenkraft vorgeschlagen, das Gewicht des Fahrers und gegebenenfalls dessen Sitzposition über eine Fahrersitzsensorik zu erfassen. Abhängig von den erfassten Größen wird dann eine Gegenkraft automatisch eingestellt.

Diese Vorgehensweise erlaubt zwar eine automatische Einstellung der erzeugten Gegenkraft, sie ist aber weit von einer individuellen Einstellung entfernt, weil zum Beispiel die Unterschiede zwischen Personen gleichen Gewichts und vor allem die wesentlichen Unterschiede zwischen geübten und ungeübten Bedienpersonen unberücksichtigt bleiben. Eine derartige Vorgehensweise müsste bei der Wahl der Gegenkraft immer von einer ungeübten Bedienperson ausgehen die, wie Versuche gezeigt haben, wesentlich größere Gegenkräfte und/oder Amplituden, also völlig unterschiedliche Reizintensitäten zur Wahrnehmung der durch das Fahrpedal vermittelten taktilen wahrnehmbare Hinweise benötigt, als eine mit der Bedienung vertraute Bedienperson.

Unter Vermeidung der Nachteile des Standes der Technik ist es Aufgabe der Erfindung ein Verfahren und eine Anordnung zur Durchführung des Verfahrens anzugeben, das beziehungsweise die es erlaubt, die taktil erfassbare Reizintensität eines aktiven Bedienelementes automatisch individuell an eine Bedienperson anzupassen, derart, dass einerseits der Reiz durch die Bedienperson deutlich erfassbar ist und andererseits so gewählt ist, dass die taktile Wahrnehmung des Reizes durch die Bedienperson als möglichst wenig komfortmindernd erfahren wird.

Erfindungsgemäß wird ein Verfahren mit den Merkmalen des Anspruchs 1 sowie eine Anordnung mit den Merkmalen des Anspruchs 11 vorgeschlagen.

Die Erfindung fußt auf der Überlegung, dass ein Reiz als wahrgenommen gewertet werden kann, wenn eine durch den Reiz provozierte Reaktion innerhalb eines in Versuchen ermittelten Zeitraums erfolgt. Basierend auf dieser Überlegung wird vorgeschlagen zur automatischen Benutzeranpassung der Reizcharakteristik eines von einer Bedienperson betätigbaren aktiven Bedienelementes eines Kraftfahrzeugs, wenigstens eine Reizcharakteristik in einer Fahrzeugsteuereinrichtung zu speichern und das aktive Bedienelement mittels der Reizcharakteristik anzusteuern. Die Ansteuerung erfolgt dabei so, dass das aktive Bedienelement bei Betätigung durch die Bedienperson eine der Betätigungskraft entgegengerichtete taktil wahrnehmbare Gegenkraft vorgegebener Intensität und/oder eine taktil wahrnehmbare Schwingung vorgegebener Intensität auf die Bedienperson überträgt. Nach dem Ansteuern des aktiven Bedienelementes wird dann geprüft, ob die Reaktion der Bedienperson auf die Gegenkraft und/oder Schwingung innerhalb einer vorgegebenen Zeitdauer liegt. Bei Unterschreiten der vorgegebenen Zeitdauer wird die Intensität der Reizcharakteristik verringert und gespeichert und bei Überschreiten der Zeitdauer wird die Intensität der Reizcharakteristik erhöht und gespeichert. Die gespeicherte modifizierte Reizcharakteristik wird dann zur nächsten Ansteuerung des aktiven Bedienelementes durch die Fahrzeugsteuereinrichtung verwendet.

Mit Hilfe des vorgeschlagenen Verfahrens wird vorteilhaft erreicht, dass die Reizcharakteristik, mit der die Fahrzeugsteuereinrichtung das aktive Bedienelement ansteuert, automatisch in Stufen an die Schwelle herangeführt wird, bei der das aktive Bedienelement eine Gegenkraft und/oder Schwingung erzeugt die gerade noch gut wahrnehmbar ist ohne nennenswert zu stören.

Wenn der Vorgang des Heranführens abgeschlossen ist, verwendet die Fahrzeugsteuereinrichtung bei Eintreten einer von der Fahrzeugsteuereinrichtung detektierten bestimmten Fahrsituation und/oder Betriebssituation des Fahrzeugs die gespeicherte, modifizierte Reizcharakteristik und steuert mit dieser das aktive Bedienelement an. Auf diese Weise wird vorteilhaft eine Komfortsteigerung erreicht, weil die bestimmte Fahrsituation und/oder Betriebssituation der Bedienperson mit einer an ihr haptisches Empfinden angepassten Gegenkraft und/oder Schwingung gemeldet wird.

Der Zeitpunkt der Reaktion der Bedienperson auf die Gegenkraft und/oder die Schwingung wird vorteilhaft durch Detektieren einer Veränderung der Betätigungsrichtung des aktiven Bedienelementes durch die Bedienperson und/oder durch das Detektieren des Beendigens der Betätigung des aktiven Bedienelementes durch die Bedienperson ermittelt. Hierzu ist vorteilhaft ein Sensor an dem aktiven Bedienelement vorgesehen, der die Änderung der Betätigungsrichtung durch die Bedienperson oder die Beendigung der Betätigung durch die Bedienperson erfasst. Hierzu wird eine vom Sensor erfassbare spezifische Größe physikalisch auswertet. Bei einem Pedal oder dem Lenkrad als aktivem Bedienelement kann dies beispielsweise ein mit dem Pedal oder Lenkrad gekoppelter Drehwinkelsensor sein, mittels dem die Fahrzeugsteuereinrichtung die Änderung des Drehwinkels oder die Rückkehr des Drehwinkels in eine Ausgangslage auswertet.

Zur Ermittlung der optimalen Reizcharakteristik ist es weiter von Vorteil, nach jedem Verringern der Intensität der Reizcharakteristik den Vorgang zu wiederholen, bis die vorgegebene Zeitdauer überschritten wird und dann die zuletzt verwendete Intensität um einen vorgegebenen Betrag zu erhöhen und die so modifizierte Reizcharakteristik abzuspeichern. Die gespeicherte modifizierte Reizcharakteristik wird dann zur nächsten Ansteuerung des aktiven Bedienelementes verwendet.

Im Zuge der Ermittlung der optimalen Reizcharakteristik ist es ebenfalls vorteilhaft, nach jeder Erhöhung der Intensität der Reizcharakteristik den Vorgang zu wiederholen, bis die vorgegebene Zeitdauer unterschritten wird und dann die zuletzt verwendete modifizierte Reizcharakteristik zu speichern. Die gespeicherte modifizierte Reizcharakteristik wird dann zur nächsten Ansteuerung des aktiven Bedienelementes verwendet.

Das Ermitteln der optimalen Reizcharakteristik wird vorteilhaft nach jedem Starten des Fahrzeugs ausgeführt. Dies kann beispielsweise in einer dem eigentlichen Fahrbetrieb vorgeschalteten Anlernroutine geschehen. Dazu kann die Bedienperson automatisch aufgefordert werden das aktive Bedienelement zu bedienen und dann, beginnend mit einem unteren Intensitätsgrundwert der Reizcharakteristik, das aktive Bedienelement mittels der Fahrzeugsteuereinrichtung anzusteuern und die Intensität der Reizcharakteristik in Schritten so lange zu erhöhen, bis die Reaktion der Bedienperson innerhalb der vorgegebenen Zeitdauer erfolgt. Die zuletzt verwendete Intensität ist dann die Gesuchte. Die Reizcharakteristik mit der so gefundenen Intensität kann dann direkt für die Ansteuerung verwendet werden, es kann aber auch vorteilhaft sein, eine Erhöhung der Intensität um einen vorgegebenen Betrag vorzusehen, um durch diese Maßnahme eine sichere Erkennung des Reizes durch die Bedienperson zu gewährleisten. Die so modifizierte Reizcharakteristik wird dann zur Ansteuerung des Bedienelementes verwendet, wenn eine Fahrsituation und/oder Betriebssituation des Fahrzeugs erkannt wurde, die dem Fahrer gemeldet und dadurch vermieden werden soll.

Da vor dem Fahrbetrieb durchzuführende Anlernroutinen stets komfortmindernd wirken, ist es besonders vorteilhaft, die Benutzeranpassung bei dem Vorliegen einer von der Fahrzeugsteuereinrichtung detektierten bestimmten Fahrsituation und/oder Betriebssituation auszuführen. Hierbei wird beim Unterschreiten der vorgegebenen Zeitdauer die Intensität der Reizcharakteristik verringert und die modifizierte Reizcharakteristik gespeichert und beim nächsten Eintreten der von der Fahrzeugsteuereinrichtung detektierten Fahrsituation und/oder Betriebssituation zum Ansteuern des aktiven Bedienelementes die gespeicherte modifizierte Reizcharakteristik verwendet. Beim Überschreiten der vorgegebenen Zeitdauer wird unmittelbar folgend die Intensität der Reizcharakteristik erhöht, die modifizierte Reizcharakteristik gespeichert und es erfolgt unmittelbar folgend ein Ansteuern des aktiven Bedienelementes. Der Vorgang wird unmittelbar aufeinanderfolgend so lange wiederholt, bis die Zeitdauer unterschritten wird. Die zuletzt verwendete Intensität, gegebenenfalls mit einem Sicherheitsaufschlag, wird dann für die modifizierte Reizcharakteristik herangezogen, gespeichert und beim nächsten Eintreten der von der Fahrzeugsteuereinrichtung detektierten Fahrsituation und/oder Betriebssituation zum Ansteuern des aktiven Bedienelementes verwendet.

Der Vorteil dieser Vorgehensweise besteht wie bereits angedeutet in einer Komfortsteigerung, weil eine vorgeschaltete Anlernroutine entfällt. Die Verzögerung die beim unmittelbar wiederholten Erhöhen der Intensität des Reizes eintritt fällt nicht ins Gewicht, weil die Anzahl der Intensitätsstufen eher gering ist und der taktile Kanal beim Menschen ohnehin die höchste Reizreaktionsgeschwindigkeit aufweist. Es kann vorteilhaft sein, das Verfahren auch im weiteren Fahrbetrieb, also nach dem Auffinden der geeigneten Reizcharakteristik fortzuführen, um eine ständige Anpassung der Intensität der Reizcharakteristik durchzuführen.

Da Reizempfindungen beim Menschen sehr stark von Umgebungsbedingungen abhängen ist es weiter von Vorteil, die gespeicherte Reizcharakteristik in Abhängigkeit von mittels Sensoren durch die Fahrzeugsteuereinrichtung detektierter Umweltbedingungen und/oder Fahrbedingungen vor dem Ansteuern des aktiven Bedienelementes zu modifizieren. Die Ansteuerung des aktiven Bedienelementes erfolgt dann mit der modifizierten Reizcharakteristik, derart, dass das aktive Bedienelement eine der Betätigungskraft entgegengerichtete taktil wahrnehmbare modifizierte Gegenkraft und/oder eine taktil wahrnehmbare modifizierte Schwingung entwickelt, die den detektierten Umweltbedingungen angepasst ist. Die gespeicherte Reizcharakteristik also die in einem Speicher vorgehaltene Ansteuerinformation wird dabei vorteilhaft nicht verändert, so dass die gespeicherte Reizcharakteristik bei Wegfall der detektierten Umweltbedingung unverändert verwendet werden kann.

Bei den Umweltbedingungen handelt er sich bevorzugt um die Außentemperatur und/oder die Fahrbahnbeschaffenheit und/oder die Straßenführung und/oder die Fahrzeugumgebung. Eine niedrige Außentemperatur lässt auf festes Schuhwerk der Bedienperson oder das Tragen von Handschuhen schließen und signalisiert die Notwendigkeit eine Reizcharakteristik mit etwas höherer Intensität zu verwenden. Gleiches trifft zu, wenn die Fahrbahnbeschaffenheit rau ist. In diesem Fall werden Gegenkräfte und Schwingungen von der Bedienperson schlechter wahrgenommen als bei glatter Fahrbahn. Auch eine unruhige Straßenführung oder ein hoher Umgebungsgeräuschpegel bedarf einer höheren Reizintensität, damit ein taktiler Reiz wahrgenommen wird.

Bei den die taktile Reizschwelle beeinflussenden Größen sind, nachdem das aktive Bedienelement in einem Fahrzeug angeordnet ist, auch die Fahrbedingungen denen das Fahrzeug unterliegt zu beachten. Insbesondere die Fahrzeuggeschwindigkeit und/oder die Gierrate des Fahrzeugs und/oder die Längsbeschleunigung des Fahrzeugs und/oder die Querbeschleunigung des Fahrzeugs beeinflussen die taktile Wahrnehmung. Bei Erhöhung dieser Größen wird auch eine Veränderung der Intensität des Reizes erforderlich, damit dieser von der Bedienperson wahrgenommen wird. Auch hier ist es vorteilhaft, bei Erhöhung der angesprochenen Größen eine modifizierte Reizcharakteristik, zum Beispiel höherer Intensität zu verwenden, indem die gespeicherte Reizcharakteristik vor dem Ansteuern des aktiven Bedienelementes um eine von der oder den Fahrbedingungen abhängigen Weise modifiziert und zur Ansteuerung des aktiven Bedienelementes verwendet wird. Dabei wird die gespeicherte Reizcharakteristik selbst, also die in einem Speicher vorgehaltene Ansteuerinformation ebenfalls vorteilhaft nicht verändert, so dass die gespeicherte Reizcharakteristik bei Wegfall der detektierten Fahrbedingung unverändert verwendet werden kann.

Für eine Anordnung zur Durchführung des Verfahrens ist vorteilhaft vorgesehen, dass in der Fahrzeugsteuereinrichtung wenigstens eine Reizcharakteristik gespeichert ist, die vorgibt, wie die Fahrzeugsteuereinrichtung das aktive Bedienelement ansteuert, damit dieses eine der Betätigungskraft entgegengerichtete taktil wahrnehmbare Gegenkraft vorgegebener Intensität und/oder eine taktil wahrnehmbare Schwingung vorgegebener Intensität abgibt. Die Fahrzeugsteuereinrichtung ist dabei so ausgebildet, dass sie mit der wenigstens einen Reizcharakteristik zur automatischen Benutzeranpassung das aktive Bedienelement ansteuert und nach dem Ansteuern des aktiven Bedienelementes die Zeitdauer die zwischen dem Beginn der Ansteuerung und der Reaktion der Bedienperson auf die Gegenkraft und/oder Schwingung vergangen ist, mit einer vorgegebenen Zeitdauer vergleicht. Weiter ist die Fahrzeugsteuereinrichtung so ausgebildet, dass sie bei Unterschreiten der vorgegebenen Zeitdauer die Intensität der Reizcharakteristik verringert und speichert und bei Überschreiten der Zeitdauer die Intensität der Reizcharakteristik erhöht und speichert und die gespeicherte modifizierte Reizcharakteristik zur nächsten Ansteuerung des aktiven Bedienelementes verwendet.

Zur Ermittlung der Zeitdauer die zwischen dem Ansteuern des aktiven Bedienelementes und der Reaktion der Bedienperson auf die Gegenkraft und/oder Schwingung vergangen ist, enthält die Fahrzeugsteuereinrichtung vorteilhaft einen in Zeitinkrementen inkrementierbaren oder dekrementierbaren Zähler. Die Fahrzeugsteuereinrichtung startet den Zähler mit dem Ansteuern des aktiven Bedienelementes. Weiter ist die Fahrzeugsteuereinrichtung so ausgebildet, dass sie bei einem inkrementierbaren Zähler das Erreichen eines vorgegebenen ersten Zählerstandes als Überschreiten der Zeitdauer feststellt oder dass sie bei einem mit einem vorgegebenen Zählerstand geladenen dekrementierbaren Zähler beim Erreichen eines vorgegebenen zweiten Zählerstandes dies als Überschreiten der Zeitdauer feststellt. Ein in Zeitinkrementen inkrementierbarer oder dekrementierbarer Zähler stellt ein einfaches und damit vorteilhaftes Mittel dar, eine Zeitdauer zu erfassen.

Weiter ist es vorteilhaft, die Fahrzeugsteuereinrichtung mit Sensoren auszurüsten die Umweltbedingungen und/oder Fahrbedingungen ermitteln. Die mittels der Sensoren ermittelten Umweltbedingungen und/oder Fahrbedingungen werden von der Fahrzeugsteuereinrichtung in Korrekturwert für die Reizcharakteristik übergeführt. Die kann beispielsweise so erfolgen dass bei dem Vorliegen einer von der Fahrzeugsteuereinrichtung detektierten bestimmten Fahrsituation und/oder Betriebssituation die Fahrzeugsteuereinrichtung zunächst durch Sensorabfrage ermittelt, ob Umwelt- und/oder Fahrbedingungen vorliegen, die eine Korrektur der Reizcharakteristik erfordern. Ist das der Fall, adressiert die Fahrzeugsteuereinrichtung in Abhängigkeit von den ermittelten Umwelt- und/oder Fahrbedingungen einen Speicher, liest aus diesem den Korrekturwert aus und modifiziert die gespeicherte Reizcharakteristik mit dem Korrekturwert. Die Fahrzeugsteuereinrichtung verwendet dann die modifizierten Reizcharakteristik zur nächsten Ansteuerung des aktiven Bedienelementes.

Es ist darauf hinzuweisen, dass die vorstehend und auch nachfolgend beschriebenen Systemkomponenten, wie beispielsweise die Fahrzeugsteuereinrichtung, nicht zwangsläufig als Hardwarekomponenten ausgeführt sein müssen. Es ist vielmehr heute üblich, derartige Komponenten als Softwareroutinen auszubilden, die mittels Recheneinheiten ausgeführt werden und sich vorhandener Hardwarekomponenten wie Sensoren, Aktuatoren, usw. bedienen. Heute in Gebrauch befindliche Fahrzeuge verfügen in der Regel über mehrere solcher Recheneinheiten, die zur Datenübertragung miteinander vernetzt sind und unterschiedlichste Steuer-, Regel-, Analyse-, Überwachungs- und Datenübertragungsroutinen ausführen. Ebenso sind in heute üblichen Fahrzeugen eine Vielzahl von Sensoren und Aktuatoren eingesetzt, die sich zum Teil für unterschiedliche Zwecke nutzen lassen. Die Begriffe Sensoren und Aktuatoren sind dabei in ihrer allgemeinsten Bedeutung zu verstehen. Die vorstehend und nachfolgend beschriebenen Verfahren oder Verfahrensteile werden mittels der vorstehend angesprochenen Recheneinheiten als programmgestützte Steuerungsabläufe ausgeführt. Auch das ist heute üblich und bedarf keiner weiteren Erläuterung.

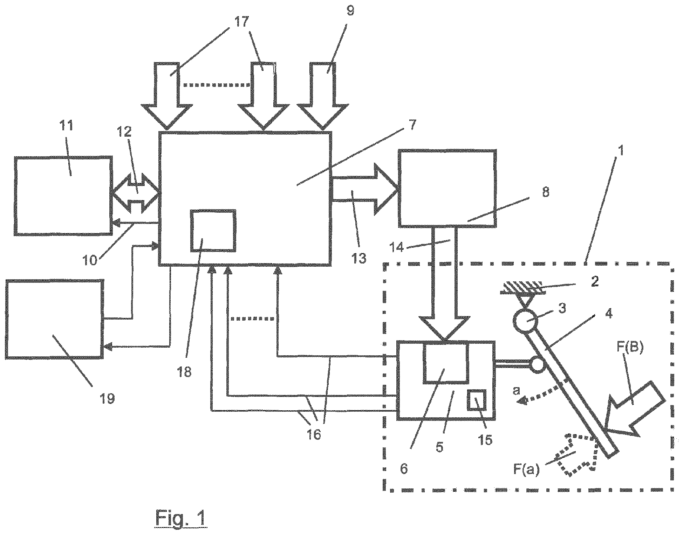

Weitere Ausgestaltungen und Vorteile der Erfindung werden nachfolgend anhand der Zeichnung näher erläutert. Diese zeigt ein vereinfachtes Blockschaltbild einer Anordnung zur Durchführung des Verfahrens.

Bevor das Verfahren zur automatischen Benutzeranpassung der Reizcharakteristik eines aktiven Bedienelementes eines Kraftfahrzeugs anhand eines Beispiels detailliert beschrieben wird, erscheint es notwendig zunächst die apparativen Gegebenheiten zu erläutern. Hierzu ist in der Zeichnung ein Blockschaltbild dargestellt, das die wichtigsten Komponenten in vereinfachter Form beispielhaft zeigt.

Ein aktives Bedienelement 1, das aus einem an dem Fahrzeug 2 um eine Punkt 3 drehbar angeordnetem Pedal 4, einer Pedalmechanik 5 und einem Aktor 6 besteht, wird von einer Fahrzeugsteuereinrichtung 7 über eine Treiberschaltung 8 angesteuert. Die Ansteuerung dient einerseits dazu, im normalen Fahrbetrieb des Fahrzeugs 2 eine vorgegebene Betätigungshaptik des Pedals 4 zu erzeugen und andererseits dazu, in von der Fahrzeugsteuereinrichtung 7 detektierten bestimmten Fahrsituationen und/oder Betriebssituationen von der Bedienperson taktil wahrnehmbare Signale abzugeben.

Im Sinne des gewählten Beispiels liegt eine solche Fahrsituation und/oder Betriebssituation des Fahrzeugs dann vor, wenn der Benutzer durch den aktuellen Betätigungsgrad des aktiven Bedienelementes 1 diese bestimmte Fahrsituation und/oder Betriebssituation herbeigeführt hat und/oder die bestimmte Fahrsituation und/oder Betriebssituation durch eine Änderung des Betätigungsgrades in einen Normalzustand rückführbar ist.

Zur Feststellung des Vorliegens der bestimmten Fahrsituationen und/oder Betriebssituationen ist die Fahrzeugsteuereinrichtung 7 über erste Leitungen 9 mit Sensoren (nicht dargestellt) verbunden, durch deren Auswertung und die Auswertung des aktuellen Betätigungsgrades des aktiven Bedienelementes 1 erkennt die Fahrzeugsteuereinrichtung 7 das Vorliegen der bestimmten Fahrsituationen und/oder Betriebssituationen. Liegt eine solche bestimmte Fahrsituation und/oder Betriebssituation vor, adressiert die Fahrzeugsteuereinrichtung 7 über Adressleitungen 10 einen Speicher 11 und liest über bidirektionale Datenleitungen 12 eine Reizcharakteristik aus. Wie bereits eingangs ausgeführt, wird hier unter Reizcharakteristik eine Ansteuerinformation verstanden, mit der die Fahrzeugsteuereinrichtung 7 über Ansteuerleitungen 13 die Treiberschaltung 8 und über diese und Leitungen 14 das aktive Bedienelement 1 beaufschlagt. Die Beaufschlagung ist betätigungswinkelabhängig, der Aktor 6 des aktiven Bedienelementes 1 wird demnach in Abhängigkeit vom Betätigungswinkel α des Pedals 4 so von der Fahrzeugsteuereinrichtung 7 gesteuert, dass er über die Pedalmechanik 5 eine bestimmte Gegenkraft F(α) erzeugt, die der Betätigungskraft F(B) des Pedals 4 und damit der Bedienperson taktil wahrnehmbar entgegengerichtet ist. Die Fahrzeugsteuereinrichtung 7 erzeugt demnach mittels der Reizcharakteristik ein vom Betätigungswinkel α abhängiges Gegenkraftverhalten, mittels dem an den Benutzer taktil wahrnehmbare Informationen übertragbar sind.

Der Betätigungswinkel α wird von einer in dem aktiven Bedienelement 1 enthaltenen Messeinrichtung 15 erfasst und über eine der Steuerleitungen 16 an die Fahrzeugsteuereinrichtung 7 übermittelt. Verwendet wird der Betätigungswinkel α dazu, aus der Reizcharakteristik die Steuerdaten zu entnehmen, mit der die Treiberschaltung 8 zu beaufschlagen ist, um die für den jeweils anliegenden Betätigungswinkel α richtige Gegenkraft F(α) am Pedal 4 zu erzeugen.

Um eine Korrektur der Steuerdaten mit der die Treiberschaltung 8 zu beaufschlagen ist, abhängig von dem Vorliegen bestimmter Umwelt- und/oder Fahrbedingungen vornehmen zu können, ist vorgesehen, dass die Fahrzeugsteuereinrichtung 7 über Sensorverbindungen 17 die Daten weiterer Sensoren (nicht dargestellt) auswertet. Abhängig vom Ergebnis der Auswertung wird die Notwendigkeit einer Korrektur und deren Größenordnung von der Fahrzeugsteuereinrichtung 7 festgestellt und aus einem Korrekturwert-Speicher 19 ein Korrekturwert entnommen, mit dem die Fahrzeugsteuereinrichtung 7 die Reizcharakteristik modifiziert.

Zur Durchführung des Verfahrens ist in der Fahrzeugsteuereinrichtung weiter ein in Zeitinkrementen inkrementierbarer Zähler 18 vorgesehen, dessen Zählerstand zur Feststellung einer vorgegebenen Zeitdauer nach jedem Inkrementieren mit einem vorgegebenen Wert verglichen wird. Gestoppt wird der Zähler einerseits bei Erreichen des vorgegebenen Wertes und andererseits bei einer Verringerung des Betätigungswinkels α des Pedals 4. Dies wird durch Überwachung des Betätigungswinkels α durch die Fahrzeugsteuereinrichtung 7 festgestellt.

Unter Nutzung der vorstehend beschriebenen Anordnung wird zur automatischen Benutzeranpassung der Reizcharakteristik so vorgegangen, dass die Fahrzeugsteuereinrichtung 7 nach dem Starten des Fahrzeugs 2 durch Auswerten der über die Leitungen 9 angeschlossenen Sensoren (nicht dargestellt) und des Betätigungswinkels α prüft, ob eine bestimmte Fahrsituation und/oder Betriebssituation gegeben ist. Ist dies der Fall, adressiert die Fahrzeugsteuereinrichtung 7 über Adressleitungen 10 den Speicher 11 und liest über die bidirektionalen Datenleitungen 12 die im Speicher 11 gespeicherte Reizcharakteristik aus. Unter Nutzung der Reizcharakteristik einerseits und des Betätigungswinkels α andererseits erzeugt die Fahrzeugsteuereinrichtung 7 die Ansteuerinformation für die Treiberschaltung 8. Die Treiberschaltung 8 steuert den Aktor 6 an und erzeugt damit die Gegenkraft F(α).

Gleichzeitig mit dem Ansteuern der Treiberschaltung 8 startet die Fahrzeugsteuereinrichtung 7 den in Zeitinkrementen inkrementierbaren Zähler 18 und vergleicht nach jedem Inkrementieren den Zählerstand mit einem vorgegebenen Zählerstand. Wird dieser Zählerstand erreicht, bevor die Fahrzeugsteuereinrichtung eine Verringerung des von ihr überwachten Betätigungswinkels α feststellt, registriert die Fahrzeugsteuereinrichtung 7 ein Überschreiten der Zeitdauer und erhöht die Intensität der Reizcharakteristik in der Weise, dass sie die ursprüngliche Reizcharakteristik mit einem vorgegebenen positiven Offset modifiziert. Sodann speichert die Fahrzeugsteuereinrichtung 7 die modifizierte Reizcharakteristik im Speicher 11 und es erfolgt unmittelbar folgend ein erneutes Ansteuern des aktiven Bedienelementes 1 mit der modifizierten Reizcharakteristik aus dem Speicher 11. Der Vorgang wird unmittelbar aufeinanderfolgend so lange wiederholt, bis der Zähler 18 durch eine Verringerung des Betätigungswinkels α des Pedals 4 gestoppt wird, bevor der vorgegebene Zählerstand erreicht ist. In diesem Fall registriert die Fahrzeugsteuereinrichtung 7 eine Zeitunterschreitung und behält die aktuell verwendete Reizcharakteristik im Speicher 11 bei und verwendet diese beim nächsten Eintreten der bestimmten Fahrsituation und/oder Betriebssituation zum Ansteuern der Treiberschaltung 8.

Wird bei einer Ansteuerung der Treiberschaltung 8 mit der aktuell im Speicher 11 gespeicherten Reizcharakteristik der mit der Ansteuerung gestartete Zähler 18 durch eine Verringerung des Betätigungswinkel α des Pedals 4 gestoppt, bevor der vorgegebene Zählerwert erreicht ist, registriert die Fahrzeugsteuereinrichtung 7 ein Unterschreiten der Zeitdauer. In diesem Fall modifiziert die Fahrzeugsteuereinrichtung 7 die zuletzt verwendete Reizcharakteristik mit einem vorgegebenen negativen Offset und speichert die modifizierte Reizcharakteristik im Speicher 11. Beim nächsten Eintreten der bestimmten Fahrsituation und/oder Betriebssituation verwendet die Fahrzeugsteuereinrichtung 7 dann zur Ansteuerung der Treiberschaltung 8 diese im Speicher 11 enthaltene Reizcharakteristik.

Das Verfahren bleibt über die gesamte Betriebszeit des Fahrzeugs aktiv und führt die Reizcharakteristik stets in einen Bereich, in dem der Reiz für die Bedienperson gut wahrnehmbar ist ohne zu stören.

In Erweiterung des vorstehend beschriebenen Beispiels des erfindungsgemäßen Verfahrens kann vorgesehen sein, vor dem Ansteuern der Treiberschaltung, durch Auswerten weiterer Sensoren (nicht dargestellt) die über Sensorverbindungen 17 mit der Fahrzeugsteuereinrichtung 7 verbunden sind, das Vorliegen von bestimmten Umwelt- und/oder Fahrbedingungen zu überprüfen. Bei Feststellen der bestimmten Umwelt- und/oder Fahrbedingungen modifiziert die Fahrzeugsteuereinrichtung 7 die aus dem Speicher 11 entnommene Reizcharakteristik mit einem von den festgestellten Umwelt- und/oder Fahrbedingungen abgeleiteten positiven Offset und steuert die Treiberschaltung 8 mit der so modifizierten Reizcharakteristik an. Auf diese Weise wird die Umweltabhängigkeit der Reizempfindung der Bedienperson ausgeglichen.

Abweichend vom vorstehend beschriebenen Beispiel kann an Stelle des die Gegenkraft (F(α)) erzeugenden Aktors 6 ein Schwingungserzeuger (nicht dargestellt) eingesetzt sein. In diesem Fall enthält die Reizcharakteristik eine Information darüber, wie eine den Schwingungserzeuger beaufschlagende Treiberschaltung anzusteuern ist, damit der Schwingungserzeuger über die Pedalmechanik 5 eine Schwingung entsprechend der Reizcharakteristik auf die Bedienperson überträgt. Im Übrigen läuft das Verfahren so ab und ist die Anordnung zur Durchführung des Verfahrens so beschaffen wie vorstehend beschrieben.

## Patentansprüche

1. Verfahren zur automatischen Benutzeranpassung der Reizcharakteristik eines von einer Bedienperson betätigbaren aktiven Bedienelementes (1) eines Fahrzeugs (2), **dadurch gekennzeichnet, dass** wenigstens eine Reizcharakteristik in einer Fahrzeugsteuereinrichtung (7) gespeichert ist und die Fahrzeugsteuereinrichtung (7) mittels der Reizcharakteristik das aktive Bedienelement (1) ansteuert, derart, dass dieses bei Betätigung durch die Bedienperson eine der Betätigungskraft (F(B))
entgegengerichtete taktil wahrnehmbare Gegenkraft (F(α)) vorgegebener Intensität und/oder eine taktil wahrnehmbare Schwingung vorgegebener Intensität auf die Bedienperson überträgt und dass nach dem Ansteuern des aktiven Bedienelementes (1) geprüft wird, ob die Reaktion der Bedienperson auf die Gegenkraft (F(α)) und/oder Schwingung innerhalb einer vorgegebenen Zeitdauer liegt, und dass bei Unterschreiten der vorgegebenen Zeitdauer die Intensität der Reizcharakteristik verringert und gespeichert wird und bei Überschreiten der Zeitdauer die Intensität der Reizcharakteristik erhöht und gespeichert wird und dass die gespeicherte modifizierte Reizcharakteristik zur nächsten Ansteuerung des aktiven Bedienelementes (1) durch die Fahrzeugsteuereinrichtung (7) verwendet wird.

2. Verfahren nach Anspruch 1, **dadurch gekennzeichnet, dass** bei Eintreten einer von der Fahrzeugsteuereinrichtung (7) detektierten bestimmten Fahrsituation und/oder Betriebssituation des Fahrzeugs (2) die Fahrzeugsteuereinrichtung (7) mittels der gespeicherten modifizierten Reizcharakteristik das aktive Bedienelement (1) ansteuert.

3. Verfahren nach Anspruch 1, **dadurch gekennzeichnet, dass** der Zeitpunkt der Reaktion der Bedienperson auf die Gegenkraft (F(α)) und/oder die Schwingung durch Detektieren einer Veränderung der Betätigungsrichtung des aktiven Bedienelementes (1) durch die Bedienperson und/oder durch Detektieren des Beendigens der Betätigung des aktiven Bedienelementes (1) durch die Bedienperson ermittelt wird.

4. Verfahren nach einem der Ansprüche 1 bis 3, **dadurch gekennzeichnet, dass** nach jedem Verringern der Intensität der Reizcharakteristik der Vorgang wiederholt wird bis die vorgegebene Zeitdauer überschritten wird und dass dann die Intensität um einen vorgegebenen Betrag erhöht wird und die so modifizierte Reizcharakteristik gespeichert wird und dass die gespeicherte modifizierte Reizcharakteristik zur nächsten Ansteuerung des aktiven Bedienelementes (1) verwendet wird.

5. Verfahren nach einem der Ansprüche 1 bis 3, **dadurch gekennzeichnet, dass** nach jeder Erhöhung der Intensität der Reizcharakteristik der Vorgang wiederholt wird, bis die vorgegebene Zeitdauer unterschritten wird und dass dann die zuletzt verwendete modifizierte Reizcharakteristik gespeichert wird und dass die gespeicherte modifizierte Reizcharakteristik zur nächsten Ansteuerung des aktiven Bedienelementes (1) verwendet wird.

6. Verfahren nach einem der Ansprüche 1 bis 4, **dadurch gekennzeichnet, dass** die automatische Benutzeranpassung nach jedem Starten des Fahrzeugs (2) ausgeführt wird.

7. Verfahren nach Anspruch 1, **dadurch gekennzeichnet, dass** die Benutzeranpassung bei dem Vorliegen einer von der Fahrzeugsteuereinrichtung (7) detektierten bestimmten Fahrsituation und/oder Betriebssituation ausgeführt wird und dass
- beim Unterschreiten der vorgegebenen Zeitdauer die Intensität der Reizcharakteristik verringert und die modifizierte Reizcharakteristik gespeichert wird und beim nächsten Eintreten der von der Fahrzeugsteuereinrichtung (7) detektierten Fahrsituation und/oder Betriebssituation zum Ansteuern des aktiven Bedienelementes (1) die gespeicherte modifizierte Reizcharakteristik verwendet wird,
- beim Überschreiten der vorgegebenen Zeitdauer unmittelbar folgend die Intensität der Reizcharakteristik erhöht wird, die modifizierte Reizcharakteristik gespeichert wird und ein unmittelbar folgendes Ansteuern des aktiven Bedienelementes (1) erfolgt und der Vorgang unmittelbar aufeinanderfolgend so lange wiederholt wird, bis die Zeitdauer unterschritten wird und dass dann die modifizierte Reizcharakteristik gespeichert wird und beim nächsten Eintreten der von der Fahrzeugsteuereinrichtung (7) detektierten Fahrsituation und/oder Betriebssituation zum Ansteuern des aktiven Bedienelementes (1) die gespeicherte modifizierte Reizcharakteristik verwendet wird.

8. Verfahren nach einem der vorhergehenden Ansprüche, **dadurch gekennzeichnet, dass** die gespeicherte Reizcharakteristik in Abhängigkeit von mittels Sensoren durch die Fahrzeugsteuereinrichtung detektierter Umweltbedingungen und/oder Fahrbedingungen vor dem Ansteuern des aktiven Bedienelementes (1) modifiziert wird und dass die Ansteuerung des aktiven Bedienelementes (1) mit der modifizierten Reizcharakteristik erfolgt, derart, dass das aktive Bedienelement (1) ein der Betätigungskraft (F(B)) entgegengerichtete taktil wahrnehmbare modifizierte Gegenkraft (F(α)) und/oder eine taktil wahrnehmbare modifizierte Schwingung entwickelt.

9. Verfahren nach Anspruch 8, **dadurch gekennzeichnet, dass** es sich bei den Umweltbedingungen um die Außentemperatur und/oder die Fahrbahnbeschaffenheit und/oder die Straßenführung und/oder die Fahrzeugumgebung handelt.

10. Verfahren nach Anspruch 8, **dadurch gekennzeichnet, dass** es sich bei den Fahrbedingungen um die Fahrzeuggeschwindigkeit und/oder die Gierrate des Fahrzeugs und/oder die Längsbeschleunigung des Fahrzeugs und/oder die Querbeschleunigung des Fahrzeugs handelt.

11. Anordnung zur Durchführung des Verfahrens gemäß einem der vorhergehenden Ansprüche, wobei das Fahrzeug (2) eine Fahrzeugsteuereinrichtung (7) und ein über diese ansteuerbares aktives Bedienelement (1) enthält, **dadurch gekennzeichnet, dass** in der Fahrzeugsteuereinrichtung (7) wenigstens eine Reizcharakteristik gespeichert ist, die vorgibt, wie die Fahrzeugsteuereinrichtung (7) das aktive Bedienelement (1) ansteuert, damit dieses eine der Betätigungskraft (F(B)) entgegengerichtete taktil wahrnehmbare Gegenkraft (F(α)) vorgegebener Intensität und/oder eine taktil wahrnehmbare Schwingung vorgegebener Intensität abgibt, und die Fahrzeugsteuereinrichtung (7) so ausgebildet ist, dass sie mit der wenigstens einen Reizcharakteristik zur automatischen Benutzeranpassung das aktive Bedienelement (1) ansteuert und nach dem Ansteuern des aktiven Bedienelementes (1) die Zeitdauer, die zwischen dem Beginn der Ansteuerung und der Reaktion der Bedienperson auf die Gegenkraft (F(α)) und/oder Schwingung vergangen ist, mit einer vorgegebenen Zeitdauer vergleicht und dass die Fahrzeugsteuereinrichtung (7) bei Unterschreiten der vorgegebenen Zeitdauer die Intensität der Reizcharakteristik verringert und speichert und bei Überschreiten der Zeitdauer die Intensität der Reizcharakteristik erhöht und speichert und dass die Fahrzeugsteuereinrichtung (7) die gespeicherte modifizierte Reizcharakteristik zur nächsten Ansteuerung des aktiven Bedienelementes (1) verwendet.

12. Anordnung nach Anspruch 11, **dadurch gekennzeichnet, dass** die Fahrzeugsteuereinrichtung zur Ermittlung der Zeitdauer, die zwischen dem Ansteuern des aktiven Bedienelementes (1) und der Reaktion der Bedienperson auf die Gegenkraft (F(α)) und/oder Schwingung vergangen ist, einen in Zeitinkrementen inkrementierbaren oder dekrementierbaren Zähler (18) enthält, der mit dem Ansteuern des aktiven Bedienelementes (1) gestartet wird, und die Fahrzeugsteuereinrichtung (7) so ausgebildet ist, dass sie bei einem inkrementierbaren Zähler das Erreichen eines vorgegebenen ersten Zählerstandes als Überschreiten der Zeitdauer feststellt oder dass sie bei einem mit einem vorgegebenen Zählerstand geladenen dekrementierbaren Zähler das Erreichen eines vorgegebenen zweiten Zählerstandes als Überschreiten der Zeitdauer feststellt.

13. Anordnung nach einem der Ansprüche 11 oder 12, **dadurch gekennzeichnet, dass** die Fahrzeugsteuereinrichtung (7) so ausgebildet ist, dass sie mit Hilfe von Sensoren Umweltbedingungen und/oder Fahrbedingungen ermittelt und dass sie bei Feststellen vordefinierter Umweltbedingungen und/oder Fahrbedingungen einen Korrekturwert für die Reizcharakteristik bestimmt und die gespeicherte Reizcharakteristik mit dem Korrekturwert modifiziert und dass die Fahrzeugsteuereinrichtung (7) die modifizierte Reizcharakteristik zur nächsten Ansteuerung des aktiven Bedienelementes (1) verwendet.

## Claims

1. Method for automatic user adaptation of the triggering characteristic of an active operator control element (1) of a motor vehicle (2), **characterised in that** at least one triggering characteristic is stored in a motor vehicle control device (7) and the motor vehicle control device (7) actuates the active operator control element (1) by means of the triggering characteristic in such a way that when actuation by the operator occurs this transmits to the operator an opposing force (F(α)) which can be perceived tactually, is opposed to the activation force (F(B)) and has a predefined intensity and/or an oscillation which can be perceived tactually and has a predefined intensity, and **in that** after the actuation of the active operator control element (1), it is checked whether the reaction of the operator to the opposing force (F(α)) and/or oscillation occurs within a predefined time period, and **in that** when the predefined time period is not reached, the intensity of the triggering characteristic is reduced and stored, and when the time period is exceeded, the intensity of the triggering characteristic is increased and stored, and **in that** the stored modified triggering characteristic is used for the next actuation of the active operator control element (1) by the vehicle control element (7).

2. Method according to claim 1, **characterised in that** when one of the determined driving situations and/or operating situations of the motor vehicle (2) detected by the motor vehicle control device (7) occurs, the motor vehicle control device (7) actuates the active operator control element (1) by means of the stored, modified triggering characteristic.

3. Method according to claim 1, **characterised in that** the reaction time of the operator to the opposing force (F(α)) and/or the oscillation is determined by detecting a change in the actuation direction of the active operator control element (1) by the operator and/or by detecting the end of the actuation of the active operator control element (1) by the operator.

4. Method according to any one of claims 1 to 3, **characterised in that** after each reduction of the intensity of the triggering characteristic, the process is repeated until the predetermined time value is exceeded, and **in that** the intensity is then increased by a predetermined amount and the thus modified triggering characteristic is stored, and **in that** the stored modified triggering characteristic is used for the next actuation of the active operator control element (1).

5. Method according to any one of claims 1 to 3, **characterised in that** after each increase of the intensity of the triggering characteristic, the process is repeated until the predetermined time value is not reached, and **in that** the last-used modified triggering characteristic is then stored, and **in that** the stored modified triggering characteristic is used for the next actuation of the active operator control element (1).

6. Method according to any one of claims 1 to 4, **characterised in that** the automatic user adaptation is carried out after each starting of the motor vehicle (2).

7. Method according claim 1, **characterised in that** the user adaptation is carried out when of the determined driving situation and/or operating situation detected by the motor vehicle control device (7) occurs and **in that**
- when the predetermined time period is not reached, the intensity of the triggering characteristic is reduced and the modified triggering characteristic is stored and the stored, modified triggering characteristic is used to actuate the active operator control element (1) at the next occurrence of the driving situation and/or operating situation detected by the motor vehicle control device (7),
- when the predetermined time period is exceeded, the intensity of the triggering characteristic is increased immediately, the modified triggering characteristic is stored and the active operator control element (1) is actuated immediately, and the processes is immediately repeated until the time period is not reached and **in that** the modified triggering characteristic is then stored and used to control the active operator control element (1) at the next occurrence of the driving situation and/or operating situation detected by the motor vehicle control device (7).

8. Method according to any one of the preceding claims, **characterised in that** the saved triggering characteristic is modified before actuating the active operator control element (1) in response to the environmental conditions and/or driving conditions detected by the motor vehicle control device by means of sensors, and **in that** actuating the active operator control element (1) with the modified triggering characteristic is carried out in such a way that the active operator control element (1) develops a modified opposing force (F(α)) which can be perceived tactually and is opposed to the activation force (F(B)) and/or a modified oscillation which can be perceived tactually.

9. Method according to claim 8, **characterised in that** environmental conditions relate to the outside temperature and/or the condition of the roadway and/or the street alignment and/or the motor vehicle environment.

10. Method according to claim 8, **characterised in that** driving conditions relate to the motor vehicle speed and/or the yaw rate of the motor vehicle and/or the longitudinal acceleration of the motor vehicle and/or the lateral acceleration of the motor vehicle.

11. Arrangement for performing the method according to any one of the preceding claims, wherein the motor vehicle (2) includes a motor vehicle control device (7) and an active operator control element (1) which can be actuated by the latter, **characterised in that** at least one triggering characteristic is stored in the motor vehicle control device (7) which determines how the motor vehicle control device (7) actuates the active operator control element (1) so that this generates an opposing force (F(α)) which can be perceived tactually, is opposed to the activation force (F(B)) and has a predefined intensity and/or an oscillation which can be perceived tactually and has a predefined intensity, and the motor vehicle control device (7) is configured such that is actuates the active operator control element (1) with the at least one triggering characteristic for the automatic user adaptation, and after the actuation of the active operator control element (1), the time period between the beginning of the actuation and the reaction of the operator to the opposing force (F(α)) and/or the oscillation is compared with a predetermined time period, and **in that** the motor vehicle control device (7) reduces and stores the intensity of the triggering characteristic when the predetermined time period has not been reached and increases and stores the intensity of the triggering characteristic when the time period is exceeded, and **in that** the motor vehicle control device (7) uses the stored modified triggering characteristic for the next actuation of the active operator control element (1).

12. Arrangement according to claim 11, **characterised in that** the motor vehicle control device includes a counter (18) which can be an incrementable or decrementable in time increments for determining the time period between the actuation of the active operator control element (1) and the reaction of the operator to the opposing force (F(α)) and/or the oscillation which is started with the actuation of the active operator control element (1), and the motor vehicle control device (7) is configured in such a way that with an incrementable counter reaching a predetermined first counter state is determined as exceeding the time period or that with a decrementable counter loaded with a predetermined counter state, reaching a predetermined second counter state is determined as exceeding the time period.

13. Arrangement according to claim 11 or 12, **characterised in that** the motor vehicle control device (7) is configured in such a way that it determines environmental conditions and/or driving conditions using sensors, and **in that** when determining predefined environmental conditions and/or driving conditions a correction value is determined for the triggering characteristic and the stored triggering characteristic is modified with the correction value, and **in that** the motor vehicle control device (7) uses the modified triggering characteristic for the next actuation of the active operator control element (1).

## Revendications

1. Procédé d'adaptation automatique à l'utilisateur de la caractéristique de stimulus d'un élément de commande actif (1), pouvant être actionné par un utilisateur, d'un véhicule (2), **caractérisé en ce**
**qu'**au moins une caractéristique de stimulus est mémorisée dans un dispositif de commande de véhicule (7) et le dispositif de commande de véhicule (7) commande l'élément de commande actif (1) au moyen de la caractéristique de stimulus de telle sorte que, lors de l'actionnement par l'utilisateur, ledit élément de commande transmet à l'utilisateur une force antagoniste (F(α)) opposée à la force d'actionnement (F(B)), perceptible de façon tactile et d'intensité prédéterminée et/ou une vibration perceptible de façon tactile et d'intensité prédéterminée et que, après la commande de l'élément de commande actif (1), on vérifie si la réaction de l'utilisateur à la force antagoniste (F(α)) et/ou à la vibration est comprise dans une durée prédéterminée
et **en ce que**, lorsque le temps de réaction est inférieur à la durée prédéterminée, l'intensité de la caractéristique de stimulus est réduite et mémorisée et, lorsque le temps de réaction est supérieur à la durée, l'intensité de la caractéristique de stimulus est augmentée et mémorisée
et **en ce que** la caractéristique de stimulus modifiée mémorisée est utilisée pour la prochaine commande de l'élément de commande actif (1) par le dispositif de commande de véhicule (7).

2. Procédé selon la revendication 1, **caractérisé en ce que**, à l'apparition d'une certaine situation de conduite et/ou de fonctionnement du véhicule (2) détectée par le dispositif de commande de véhicule (7), le dispositif de commande de véhicule (7) commande l'élément de commande actif (1) au moyen de la caractéristique de stimulus modifiée mémorisée.

3. Procédé selon la revendication 1, **caractérisé en ce que** l'instant de la réaction de l'utilisateur à la force antagoniste (F(α)) et/ou à la vibration est déterminé en détectant un changement de la direction d'actionnement de l'élément de commande actif (1) par l'utilisateur et/ou en détectant la fin de l'actionnement de l'élément de commande actif (1) par l'utilisateur.

4. Procédé selon l'une quelconque des revendications 1 à 3, **caractérisé en ce que**, après chaque réduction de l'intensité de la caractéristique de stimulus, l'opération est répétée jusqu'à ce que le temps de réaction devienne supérieur à la durée prédéterminée et **en ce que** l'intensité est ensuite augmentée d'une valeur prédéterminée et la caractéristique de stimulus ainsi modifiée est mémorisée et **en ce que** la caractéristique de stimulus modifiée mémorisée est utilisée pour la prochaine commande de l'élément de commande actif (1).

5. Procédé selon l'une quelconque des revendications 1 à 3, **caractérisé en ce que**, après chaque augmentation de l'intensité de la caractéristique de stimulus, l'opération est répétée jusqu'à ce que le temps de réaction devienne inférieur à la durée prédéterminée et **en ce que** la dernière caractéristique de stimulus modifiée utilisée est ensuite mémorisée et **en ce que** la caractéristique de stimulus modifiée mémorisée est utilisée pour la prochaine commande de l'élément de commande actif (1).

6. Procédé selon l'une quelconque des revendications 1 à 4, **caractérisé en ce que** l'adaptation automatique à l'utilisateur est effectuée après chaque démarrage du véhicule (2).

7. Procédé selon la revendication 1, **caractérisé en ce que** l'adaptation à l'utilisateur est effectuée en présence d'une situation de conduite et/ou de fonctionnement détectée par le dispositif de commande de véhicule (7) et **en ce que**
- lorsque le temps de réaction devient inférieur à la durée prédéterminée, l'intensité de la caractéristique de stimulus est réduite et la caractéristique de stimulus modifiée est mémorisée et, à la prochaine apparition de la situation de conduite et/ou de fonctionnement détectée par le dispositif de commande de véhicule (7), la caractéristique de stimulus modifiée mémorisée est utilisée pour commander l'élément de commande actif (1),
- lorsque le temps de réaction devient supérieur à la durée prédéterminée, l'intensité de la caractéristique de stimulus est augmentée immédiatement après, la caractéristique de stimulus modifiée est mémorisée et une commande immédiatement consécutive de l'élément de commande actif (1) s'effectue et l'opération est répétée immédiatement successivement jusqu'à ce que le temps de réaction devienne inférieur à la durée et la caractéristique de stimulus modifiée est ensuite mémorisée et, à la prochaine apparition de la situation de conduite et/ou de fonctionnement détectée par le dispositif de commande de véhicule (7), la caractéristique de stimulus modifiée mémorisée est utilisée pour commander l'élément de commande actif (1).

8. Procédé selon l'une quelconque des revendications précédentes, **caractérisé en ce que** la caractéristique de stimulus mémorisée est modifiée en fonction de conditions d'environnement et/ou de conduite détectées au moyen de capteurs par le dispositif de commande de véhicule avant de commander l'élément de commande actif (1) et **en ce que** la commande de l'élément de commande actif (1) s'effectue avec la caractéristique de stimulus modifiée de telle sorte que l'élément de commande actif (1) développe une force antagoniste (F(α)) modifiée opposée à la force d'actionnement (F(B)) et perceptible de façon tactile et/ou une vibration modifiée perceptible de façon tactile.

9. Procédé selon la revendication 8, **caractérisé en ce que** les conditions d'environnement concernent la température extérieure et/ou la qualité de la chaussée et/ou le tracé de la route et/ou l'environnement du véhicule.

10. Procédé selon la revendication 8, **caractérisé en ce que** les conditions de conduite concernent la vitesse du véhicule et/ou l'angle de lacet du véhicule et/ou l'accélération longitudinale du véhicule et/ou l'accélération transversale du véhicule.

11. Système destiné à la mise en oeuvre du procédé selon l'une quelconque des revendications précédentes, dans lequel le véhicule (2) contient un dispositif de commande de véhicule (7) et un élément de commande actif (1) pouvant être commandé par l'intermédiaire de celui-ci, **caractérisé en ce que**
dans le dispositif de commande de véhicule (7) est mémorisée au moins une caractéristique de stimulus qui prescrit comment le dispositif de commande de véhicule (7) commande l'élément de commande actif (1) pour que celui-ci délivre une force antagoniste (F(α)) opposée à la force d'actionnement (F(B)), perceptible de façon tactile et d'intensité prédéterminée et/ou une vibration perceptible de façon tactile et d'intensité prédéterminée,
et le dispositif de commande de véhicule (7) est conçu de telle sorte qu'il commande l'élément de commande actif (1) avec l'au moins une caractéristique de stimulus en vue de l'adaptation automatique à l'utilisateur et, après la commande de l'élément de commande actif (1), il compare la durée, qui s'est écoulée entre le début de la commande et la réaction de l'utilisateur à la force antagoniste (F(α)) et/ou à la vibration, à une durée prédéterminée
et, lorsque le temps de réaction devient inférieur à la durée prédéterminée, le dispositif de commande de véhicule (7) réduit et mémorise l'intensité de la caractéristique de stimulus et, lorsque le temps de réaction devient supérieur à la durée, il augmente et mémorise l'intensité de la caractéristique de stimulus et, à la prochaine commande de l'élément de commande actif (1), le dispositif de commande de véhicule (7) utilise la caractéristique de stimulus modifiée mémorisée.

12. Système selon la revendication 11, **caractérisé en ce que**, pour déterminer la durée qui s'est écoulée entre la commande de l'élément de commande actif (1) et la réaction de l'utilisateur à la force antagoniste (F(α)) et/ou à la vibration, le dispositif de commande de véhicule contient un compteur (18) qui peut être incrémenté ou décrémenté en incréments temporels et qui est démarré avec la commande de l'élément de commande actif (1) et le dispositif de commande de véhicule (7) est conçu de telle sorte que, en présence d'un compteur pouvant être incrémenté, le fait d'atteindre un premier état de compteur prescrit est considéré comme dépassement de la durée ou, en présence d'un compteur pouvant être décrémenté et chargé avec un état de compteur prescrit, le fait d'atteindre un deuxième état de compteur prescrit est considéré comme dépassement de la durée.

13. Système selon l'une quelconque des revendications 11 ou 12, **caractérisé en ce que** le dispositif de commande de véhicule (7) est conçu de telle sorte qu'il détermine des conditions d'environnement et/ou de conduite à l'aide de capteurs et que, lorsque des conditions d'environnement et/ou de conduite prédéfinies sont constatées, il détermine une valeur de correction pour la caractéristique de stimulus et il modifie la caractéristique de stimulus mémorisée avec la valeur de correction et le dispositif de commande de véhicule (7) utilise la caractéristique de stimulus modifiée pour la prochaine commande de l'élément de commande actif (1).
